# EUROPEAN PATENT SPECIFICATION

(11) **EP 3 255 086 B1**
(45) Date of publication and mention of the grant of the patent: **28.06.2023**
(21) Application number: 16746821.4
(22) Date of filing: 02.02.2016
(51) Int. Cl.: C08K 5/00, C08K 5/11, C08L 27/06, C08K 3/00, C08K 7/22

(54) **ENVIRONMENTALLY FRIENDLY PLASTICIZER COMPOSITION, AND VINYL CHLORIDE RESIN COMPOSITION CONTAINING SAME**
UMWELTFREUNDLICHE WEICHMACHERZUSAMMENSETZUNG UND VINYLCHLORID-HARZZUSAMMENSETZUNG DAMIT
COMPOSITION DE PLASTIFIANT RESPECTUEUSE DE L'ENVIRONNEMENT ET COMPOSITION DE RÉSINE DE CHLORURE DE VINYLE LA CONTENANT

(30) Priority: 04.02.2015 KR 20150017380
(43) Date of publication of application: 13.12.2017
(73) Proprietor: Hanwha Chemical Corporation, Seoul 04541 (KR)
(72) Inventor: KIM, Yeo Jin, Seoul 04358 (KR); KIM, Jae Song, Daejeon 34067 (KR); JANG, Yeon Su, Daejeon 35374 (KR)
(74) Representative: Gevers & Orès
(86) International application number: PCT/KR2016/001126
(87) International publication number: WO 2016/126080

(56) References cited:
- EP-A1- 3 130 631
- WO-A1-2007/021987
- CN-A- 1 636 962
- CN-A- 104 109 324
- KR-A- 20070 075 341
- KR-B1- 101 408 609
- US-A1- 2007 287 781
- US-A1- 2013 310 472
- DATABASE CA [Online] CHEMICAL ABSTRACTS SERVICE, COLUMBUS, OHIO, US; XIE, HUA: "Radiation-curable low-smoke halogen-free flame-retardant polyolefin material for photovoltaic cable", XP002781364, retrieved from STN Database accession no. 160:234838 -& CN 103 509 229 A (LUBAO CABLE GROUP CO., LTD., PEOP. REP. CHINA) 15 January 2014 (2014-01-15)
- DATABASE WPI Week 201503 Thomson Scientific, London, GB; AN 2015-024461 XP002781365, -& CN 104 109 324 A (DONGGUAN QILONG ELECTRIC CO LTD) 22 October 2014 (2014-10-22)

## Description

### [Technical Field]

The present invention relates to a plasticizer composition capable of improving a migration property of a plasticizer and a gelling rate, and a vinyl chloride resin composition including the same.

### [Background Art]

A vinyl chloride resin, which is a vinyl chloride homopolymer or a copolymer containing 50% or more of vinyl chloride, is one of the five major thermoplastic resins prepared by suspension polymerization or emulsion polymerization. Among them, a polyvinyl chloride resin prepared by emulsion polymerization is mixed with a plasticizer, a stabilizer, a filler, a blowing agent, a pigment, a viscosity depressant, titanium dioxide (TiO₂), and a sub-material having a specific function to be used in a plastisol form. This plastisol is used in a wide variety of fields, such as a floor material, wallpaper, tarpaulin, artificial leather, toys, a coating material for an under body of a vehicle, etc., through a coating forming or mold coating forming method.

CN 104231482 A discloses a PVC composition containing a plasticizer mixture. This plasticizer mixture comprises, as essential component dioctyl terephthalate, as well as other compnents.

The vinyl chloride resins are mostly applied to products that are directly exposed to human bodies, and therefore, many efforts have been continued to provide environmentally friendly vinyl chloride resin compositions in vinyl chloride resin-related fields. Among them, products using the vinyl chloride resins include a plasticizer which is added during a preparation process, for example, a phthalate-based plasticizer such as di-2-ethylhexyl phthalate (DEHP), and the phthalate-based plasticizer is socially considered as an endocrine disrupter that interrupts or disrupts human hormonal action, and suspected as an environmental hormone. Therefore, there are moves to regulate the phthalate-based plasticizers. Recently, use of non-phthalate-based plasticizers instead of phthalate-based plasticizers has been reported.

For example, Korean Patent Publication No. 2008-0105341 discloses that DOTP (dioctyl terephthalate), which is a non-phthalate-based plasticizer, is used alone or in combination with DINP (di-isononyl phthalate). However, there are problems in that the plasticizer or the plasticizer mixture has an inferior gelling property to have a poor foaming property, and a migration phenomenon, whereby the plasticizer leaks out of the vinyl chloride resin over time, occurs.

### [Disclosure]

### [Technical Problem]

The present invention provides a plasticizer composition capable of improving a gelling rate and a migration property of a plasticizer.

Further, the present invention provides a vinyl chloride resin composition including the plasticizer composition.

### [Technical Solution]

According to an embodiment of the present invention, provide is a plasticizer composition comprising 100 parts by weight of a vinyl chloride resin, and40 parts by weight to 120 parts by weight of a plasticizer composition **consisting of** dioctyl terephthalate and a compound represented by the following Chemical Formula 1: 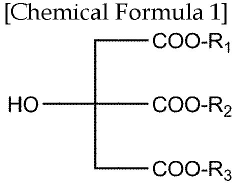
wherein R₁ to R₃ are each independently C₂₋₈ alkyl
wherein a weight ratio of dioctyl terephthalate and the compound represented by Chemical Formula 1 is 8:2 to 6:4.

The plasticizer composition according to an embodiment is used as a plasticizer of a vinyl chloride resin, and due to interactions between two or more plasticizers, migration of the plasticizers may be effectively inhibited, and a gelling rate of a resin composition including the plasticizer composition may be remarkably improved.

The dioctyl terephthalate is, also called di(2-ethylhexyl)terephthalate, known as an environmentally friendly plasticizer. However, dioctyl terephthalate has a problem of migration.

The plasticizer migration means a phenomenon, whereby part of a plasticizer mixed with a polymer resin leaks out of the polymer resin. When the leaked plasticizer enters the human body, it may inhibit the normal activity of the endocrine system which is directly involved in life activities or trigger abnormal reactions to cause fatal harm, and therefore, the plasticizer migration should be suppressed as much as possible.

Accordingly, in the present invention, while excellent properties of the dioctyl terephthalate as the plasticizer are maintained, the compound represented by Chemical Formula 1 is used together in order to suppress the plasticizer migration.

The compound represented by Chemical Formula 1 is an ester compound of citric acid and C₂₋₈ alcohol, not theoretically limited to, but it enables the plasticizer not to leak out of the vinyl chloride resin due to interactions such as hydrogen bonding between the ester group and an ester group of dioctyl terephthalate.

In Chemical Formula 1, R₁ to R₃ are each independently a butyl or octyl compound. As a result, the plasticizer migration may be more effectively suppressed and the gelling rate may be improved.

Examples of the compound represented by Chemical Formula 1 may include tributyl citrate, butyldioctyl citrate, dibutyloctyl citrate, trioctyl citrate, or mixtures thereof. Here, butyldioctyl citrate collectively refers to compounds wherein one of R₁ to R₃ of Chemical Formula 1 is butyl and the other two are octyl, and dibutyloctyl citrate collectively refers to compounds wherein one of R₁ to R₃ of Chemical Formula 1 is octyl and the other two are butyl.

The compound represented by Chemical Formula 1 may be purchased from commercially available sources or prepared by the following Reaction Scheme 1:

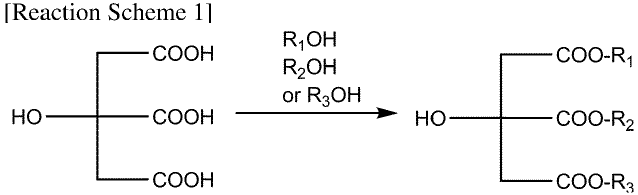

This reaction is an esterification reaction of citric acid and C₂₋₈ alcohol, and the reaction may be carried out at once or the reaction may be carried out sequentially by varying reactants, depending on the structure of R₁ to R₃. Conditions for the reaction may be the same as those for the esterification reaction commonly used in the art.

A weight ratio of the dioctyl terephthalate and the compound represented by Chemical Formula 1 is 8:2 to 6:4.

If the content of the compound represented by Chemical Formula 1 is less than the above range, the migration property of the plasticizer may not be effectively improved, and if the content of the compound represented by Chemical Formula 1 is more than the above range, the content of the dioctyl terephthalate may be decreased to greatly deteriorate thermal stability and foaming property.

Referring to Examples described below, it was confirmed that when the weight ratio of the dioctyl terephthalate and the compound represented by Chemical Formula 1 is controlled from 8:2 to 6:4, the migration property of the plasticizer is improved.

Meanwhile, according to another embodiment of the present invention, provided is a vinyl chloride resin composition including 100 parts by weight of the vinyl chloride resin and 40 parts by weight to 120 parts by weight of the plasticizer composition.

The vinyl chloride resin composition may include the plasticizer composition according to an embodiment, thereby improving the migration property of the plasticizer. Further, owing to the plasticizer composition, the vinyl chloride resin composition may exhibit an improved gelling rate, compared to a known resin composition including only dioctyl terephthalate as a plasticizer. The vinyl chloride resin may be polyvinyl chloride (PVC) having a polymerization degree of 700 to 1,200, but is not limited thereto.

The vinyl chloride resin composition may further include additives, for example, any one or more selected from the group consisting of a stabilizer, a blowing agent, a filler, and titanium dioxide (TiO₂). The additives may be properly selected according to physical properties of the vinyl chloride resin composition which are intended to be improved.

The stabilizer may be added in order to prevent changes of various physical properties which are generated when HCl is separated from the vinyl chloride resin to form a polyene structure, which is a chromophore, and to generate a cutting and cross-linking phenomenon in a main chain. The stabilizer may include any one or more selected from the group consisting of Ca-Zn based compounds, K-Zn based compounds, Ba-Zn based compounds, organic Tin based compounds, metallic soap based compounds, phenolic compounds, phosphoric acid ester based compounds, and phosphorous acid ester based compounds. More specific examples of the stabilizer which may be used in the present invention may include Ca-Zn based compounds; K-Zn based compounds; Ba-Zn based compounds; organic Tin based compounds such as mercaptide based compounds, maleic acid based compound, or carboxylic acid based compound; metallic soap based compounds such as Mg-stearate, Ca-stearate, Pb-stearate, Cd-stearate, or Bastearate, etc.; phenolic compounds; phosphoric acid ester based compounds; phosphorous acid ester based compounds, etc., and these stabilizers may be selectively included according to the purpose of use. In the present invention, particularly, K-Zn based compounds, preferably, K-Zn based composite organic compounds may be used.

The stabilizer may be included in an amount of preferably 0.5 to 7 parts by weight, and more preferably 1 to 4 parts by weight, with respect to 100 parts by weight of the vinyl chloride resin. If the content of the stabilizer is less than 0.5 parts by weight, thermal stability may be reduced, and if the content is more than 7 parts by weight, thermal stability more than necessary may be obtained.

The blowing agent used in the present invention may include any one or more selected from a chemical blowing agent, a physical blowing agent, or a mixture thereof.

The chemical blowing agent is not particularly limited, as long as it is a compound which may be decomposed above a specific temperature to generate gas, and examples thereof may include azodicarbonamide, azodiisobutyro-nitrile, benzenesulfonhydrazide, 4,4-oxybenzene sulfonyl-semicarbazide, p-toluene sulfonyl semi-carbazide, barium azodicarboxylate, N,N'-dimethyl-N,N'-dinitrosoterephthalamide, trihydrazino triazine, etc. In addition, examples of the chemical blowing agent may include sodium bicarbonate, potassium bicarbonate, ammonium bicarbonate, sodium carbonate, ammonium carbonate, etc. Further, examples of the physical blowing agent may include inorganic blowing agents such as carbon dioxide, nitrogen, argon, water, air, helium, etc., or organic blowing agents such as aliphatic hydrocarbon compounds containing 1 to 9 carbon atoms, aliphatic alcohols containing 1 to 3 carbon atoms, halogenated aliphatic hydrocarbon compounds containing 1 to 4 carbon atoms, etc.

Specific examples of the above-mentioned compounds may be as follows: Examples of the aliphatic hydrocarbon compounds may include methane, ethane, propane, normal butane, isobutane, normal pentane, isopentane, neopentane, etc., examples of the aliphatic alcohols may include methanol, ethanol, normal propanol, isopropanol, etc., and examples of the halogenated aliphatic hydrocarbon compounds may include methyl fluoride, perfluoromethane, ethyl fluoride, 1,1-difluoroethane (HFC-152a), 1,1,1-trifluoroethane (HFC-143a), 1,1,1,2-tetrafluoroethane (HFC-134a), 1,1,2,2-tetrafluoromethane (HFC-134), 1,1,1,3,3-pentafluorobutane (HFC-365mfc), 1,1,1,3,3-pentafluoropropane (HFC.sub.13 245fa), pentafluoroethane, difluoromethane, perfluoroethane, 2,2-difluoropropane, 1,1,1-trifluoropropane, perfluoropropane, dichloropropane, difluoropropane, perfluorobutane, perfluorocyclobutane, methyl chloride, methylene chloride, ethyl chloride, 1,1,1-trichloroethane, 1,1-dichloro-1-fluoroethane (HCFC-141b), 1-chloro-1,1-difluoroethane (HCFC-142b), chlorodifluoromethane (HCFC-22), 1,1-dichloro-2,2,2-trifluoroethane (HCFC-123), 1-chloro-1,2,2,2-tetrafluoroethane (HCFC-124), trichloromonofluoromethane (CFC-11), dichlorodifluoromethane (CFC-12), trichlorotrifluoroethane (CFC-113), 1,1,1-trifluoroethane, pentafluoroethane, dichlorotetrafluoroethane (CFC-114), chloroheptafluoropropane, dichlorohexafluoropropane, etc. A content of the blowing agent as described above may be preferably 0.5 to 5 parts by weight, with respect to 100 parts by weight of the vinyl chloride resin. If the content of the blowing agent is excessively low, an amount of generated gas for foaming is excessively small, and therefore, a foaming effect may be insignificant or not obtained, and if the content is excessively high, the amount of generated gas is excessively large, and therefore, it is difficult to obtain the desired physical property.

The filler of the present invention may be used in order to improve productivity of the vinyl chloride resin composition and a dry touch property, and include any one or more selected from the group consisting of calcium carbonate, talc, titanium dioxide, kaolin, silica, alumina, magnesium hydroxide, and clay.

In the vinyl chloride resin composition according to the present invention, the filler may be included in an amount of preferably 30 to 150 parts by weight, and more preferably 50 to 130 parts by weight. If the content of the filler is less than 50 parts by weight, there are problems in that dimensional stability and economical efficiency may be reduced, and if the content is more than 130 parts by weight, there are problems in that a foaming surface may be poor, and processability may be deteriorated.

The vinyl chloride resin composition of the present invention may include titanium dioxide (TiO₂) to improve whiteness and a hiding property. The titanium dioxide may be included in an amount of preferably 1 to 20 parts by weight, more preferably 3 to 15 parts by weight, with respect to 100 parts by weight of the vinyl chloride resin. If the content of the titanium dioxide is less than 3 parts by weight, whiteness and the hiding property may be deteriorated, and therefore, after printing, desired colors may not be achieved, and if the content is more than 15 parts by weight, there is a problem in that the foaming surface may be deteriorated.

The vinyl chloride resin composition according to the present invention may be prepared using the vinyl chloride resin, the plasticizer, and selectively, additives by a general method known in the art, and the method is not particularly limited.

The vinyl chloride resin composition may be used as a floor material, wallpaper, tarpaulin, artificial leather, toys, a coating material for an under body of a vehicle, etc., and in particular, the vinyl chloride resin composition is advantageous in that it improves the migration property of plasticizers to reduce environmental problems and has a rapid gelling rate to increase productivity.

### [Effect of the Invention]

A plasticizer composition according to the present invention may include dioctyl terephthalate and a compound having a specific structure, thereby improving a migration property of a plasticizer and a gelling rate of a resin composition including the plasticizer composition. Accordingly, a vinyl chloride resin composition including the plasticizer composition of the present invention may solve environmental problems, and therefore, it may be used as a floor material, wallpaper, tarpaulin, artificial leather, toys, a coating material for an under body of a vehicle, etc. Further, the gelling rate of the vinyl chloride resin composition may be improved by the plasticizer composition, thereby further improving productivity of products.

### [Detailed Description of the Embodiments]

Hereinafter, the present invention will be described in more detail with reference to the following Examples. However, these Examples are for illustrative purposes only, and the scope of the present invention is not intended to be limited by these Examples.

### Examples 1 to 4 and Comparative Examples 1 and 2: Preparation of plasticizer composition

### (Example 1 is not according to the present invention)

Plasticizer compositions were prepared by mixing components described in the following Table 1 at mixing ratios described in the following Table 1, respectively.

**[Table 1]**

| | Dioctyl terephthalate (DOTP) | Tributyl citrate(TBC) | Epoxidized fatty acid methyl ester (EFAME) |
|---|---|---|---|
| Comparative Example 1 | 10 | 0 | 0 |
| Comparative Example 2 | 7 | 0 | 3 |
| Example 1 | 9 | 1 | 0 |
| Example 2 | 8 | 2 | 0 |
| Example 3 | 7 | 3 | 0 |
| Example 4 | 6 | 4 | 0 |

| | | | |
|---|---|---|---|
| (Unit: parts by weight) | | | |

### Experimental Example: Evaluation of physical properties of vinyl chloride resin composition by plasticizer composition

100 parts by weight of polyvinyl chloride and 60 parts by weight of any one of the plasticizer compositions of Examples and Comparative Examples were mixed in a Mathis mixer for 10 minutes to prepare a plastisol.

The viscosity, gelling rate, and plasticizer migration of the prepared plastisol was evaluated as follows.

After the prepared plastisol was left in a constant temperature oven at 25°C for 1 hour, the viscosity of the plastisol was measured as initial viscosity using a Brookfield viscometer (spindle #4, 20 RPM). The results are shown in the following Table 2.

The gelling rate of the prepared plastisol was measured at 110°C using an SVNC instrument. As gelling progressed in the SVNC instrument, amplitude was reduced. The gelling rate was measured using a reducing rate of this value.

While gelling was performed for 300 seconds or more using the SVNC instrument, the larger the reciprocal of the amplitude at 200 seconds, the score was recorded closer to 5 points, and the smaller the reciprocal of the amplitude, the score was recorded closer to 1 point. Therefore, higher scores indicate better gelling rates, while lower scores indicate poorer gelling rates.

In order to evaluate migration of the plasticizer to paper, each of the prepared plastisols (5 g) was dropped onto paper to form a circular film having the same diameter. Thereafter, the paper was wet over time by the plasticizer which leaked out of the plastisol film, and a spreading phenomenon was observed. The plastisol was dropped on paper, and after a predetermined period of time, the average diameter of the wet area of the paper was measured. The smaller the average diameter, the score was recorded closer to 5 points, and the larger the average diameter, the score was recorded closer to 1 point, such that migration of the plasticizer to paper was quantified.

Further, surface migration was evaluated as follows. After gelling of the prepared plastisols was performed at 220°C to prepare sheets, the sheets were stored in an oven at 60°C, and the amount of the plasticizer leaked from the sheet surface was observed and scored. Specifically, the smaller the amount of the leaked plasticizer, the score was recorded closer to 5 points, and the larger the amount of the leaked plasticizer, the score was recorded closer to 1 point.

The results of the evaluation as described above are shown in the following Table 2.

**[Table 2]**

| | Viscosity (20 rpm, cps) | Gelling rate | Migration | | |
|---|---|---|---|---|---|
| | | | Surface | Paper | Mean |
| Comparative Example 1 | 2360 | 2 | 1.5 | 2 | 1.8 |
| Comparative Example 2 | 1967 | 3 | 2 | 1 | 1.5 |
| Example 1 | 1910 | 3 | 2 | 3 | 2.5 |
| Example 2 | 2290 | 4.3 | 3 | 4.5 | 3.8 |
| Example 3 | 2750 | 4.7 | 3.5 | 5 | 4.3 |
| Example 4 | 2750 | 5 | 4 | 5 | 4.5 |

As shown in Table 2, Examples according to the present invention showed excellent gelling rate and migration property, compared to Comparative Example 1 using dioctyl terephthalate alone. In particular, referring to Comparative Example 2, the migration problem of dioctyl terephthalate was not solved, even though the known plasticizers were used in combination. It was confirmed that the problem may be solved by the specific combination of the present invention. Accordingly, it was confirmed that the plasticizer composition of the specific combination according to the present invention may be used to improve gelling rate and migration property of dioctyl terephthalate.

## Claims

1. A vinyl chloride resin composition comprising:
100 parts by weight of a vinyl chloride resin, and
40 parts by weight to 120 parts by weight of the plasticizer composition,
consisting **of** dioctyl terephthalate and a compound represented by the following Chemical Formula 1: 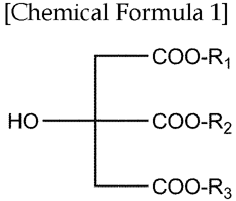
wherein R₁ to R₃ are each independently C₂₋₈ alkyl
wherein a weight ratio of dioctyl terephthalate and the compound represented by Chemical Formula 1 is 8:2 to 6:4.

2. The vinyl chloride resin composition of claim 1, further comprising any one or more selected from the group consisting of a stabilizer, a blowing agent, a filler, and titanium dioxide (TiO₂).

3. The vinyl chloride resin composition of claim 2, wherein the stabilizer is any one or more selected from the group consisting of Ca-Zn based compounds, K-Zn based compounds, Ba-Zn based compounds, organic Tin based compounds, metallic soap based compounds, phenolic compounds, phosphoric acid ester based compounds, and phosphorous acid ester based compounds.

4. The vinyl chloride resin composition of claim 2, wherein the blowing agent is any one or more selected from a chemical blowing agent, a physical blowing agent, and a mixture thereof.

5. The vinyl chloride resin composition of claim 2, wherein the filler is any one or more selected from the group consisting of calcium carbonate, talc, titanium dioxide, kaolin, silica, alumina, magnesium hydroxide, and clay.

6. The vinyl chloride resin composition of claim 1, wherein R₁ to R₃ are each independently butyl or octyl.

7. The vinyl chloride resin composition of claim 1, wherein the compound represented by Chemical Formula 1 is tributyl citrate, butyldioctyl citrate, dibutyloctyl citrate, trioctyl citrate, or a mixture thereof.

## Patentansprüche

1. Vinylchloridharzzusammensetzung, umfassend:
100 Gewichtsteile ein Vinylchloridharz und
40 Gewichtsteile bis 120 Gewichtsteile die Weichmacherzusammensetzung,
**bestehend aus** Dioctylterephthalat und einer Verbindung, die durch die folgende chemische Formel 1 dargestellt wird: 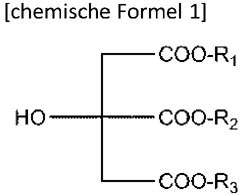
wobei R₁ bis R₃ jeweils unabhängig C₂₋₈-Alkyl sind,
wobei ein Gewichtsverhältnis von Dioctylterephthalat und der Verbindung, die durch chemische Formel 1 dargestellt wird, 8 : 2 bis 6 : 4 beträgt.

2. Vinylchloridharzzusammensetzung nach Anspruch 1, weiter umfassend eines oder mehrere, ausgewählt aus der Gruppe, bestehend aus einem Stabilisator, einem Treibmittel, einem Füllstoff und Titandioxid (TiO₂).

3. Vinylchloridharzzusammensetzung nach Anspruch 2, wobei der Stabilisator einer oder mehrere beliebige ist, ausgewählt aus der Gruppe, bestehend aus Ca-Zn basierten Verbindungen, K-Zn basierten Verbindungen, Ba-Zn basierten Verbindungen, zinnbasierten organischen Verbindungen, auf Metallseife basierten Verbindungen, phenolischen Verbindungen, phosphorsäureesterbasierten Verbindungen und phosphonsäureesterbasierten Verbindungen.

4. Vinylchloridharzzusammensetzung nach Anspruch 2, wobei das Treibmittel eines oder mehrere beliebige ist, ausgewählt aus einem chemischen Treibmittel, einem physikalischen Treibmittel und einer Mischung davon.

5. Vinylchloridharzzusammensetzung nach Anspruch 2, wobei der Füllstoff einer oder mehrere beliebige ist, ausgewählt aus der Gruppe, bestehend aus Calciumcarbonat, Talk, Titandioxid, Kaolin, Siliciumdioxid, Aluminiumoxid, Magnesiumhydroxid und Ton.

6. Vinylchloridharzzusammensetzung nach Anspruch 1, wobei R₁ bis R₃ jeweils unabhängig Butyl oder Octyl sind.

7. Vinylchloridharzzusammensetzung nach Anspruch 1, wobei die durch chemische Formel 1 dargestellte Verbindung Tributylcitrat, Butyldioctylcitrat, Dibutyloctylcitrat, Trioctylcitrat oder eine Mischung davon ist.

## Revendications

1. Composition de résine de chlorure de vinyle comprenant :
100 parties en poids d'une résine de chlorure de vinyle, et
40 parties en poids à 120 parties en poids de la composition de plastifiant,
**Consistant en** du téréphtalate de dioctyle et d'un composé représenté par la formule chimique 1 suivante : 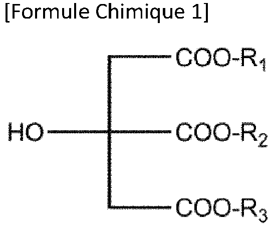
dans lequel R₁ à R₃ représentent chacun indépendamment un alkyle C₂₋₈
dans lequel le rapport en poids entre le téréphtalate de dioctyle et le composé représenté par la formule chimique 1 est compris entre 8:2 et 6:4.

2. Composition de résine de chlorure de vinyle selon la revendication 1, comprenant en outre un ou plusieurs éléments choisis dans le groupe consistant en un stabilisateur, un agent d'expansion, une charge et du dioxyde de titane (TiO₂).

3. Composition de résine de chlorure de vinyle selon la revendication 2, dans laquelle le stabilisateur est un ou plusieurs éléments choisis dans le groupe consistant en des composés à base de Ca-Zn, les composés à base de K-Zn, les composés à base de Ba-Zn, les composés à base d'étain organique, les composés à base de savon métallique, les composés phénoliques, les composés à base d'ester d'acide phosphorique et les composés à base d'ester d'acide phosphoreux.

4. Composition de résine de chlorure de vinyle selon la revendication 2, dans laquelle l'agent d'expansion est un ou plusieurs éléments choisis parmi un agent d'expansion chimique, un agent d'expansion physique et un mélange de ceux-ci.

5. Composition de résine de chlorure de vinyle selon la revendication 2, dans laquelle la charge est un ou plusieurs éléments choisis dans le groupe consistant en le carbonate de calcium, le talc, le dioxyde de titane, le kaolin, la silice, l'alumine, l'hydroxyde de magnésium et l'argile.

6. Composition de résine de chlorure de vinyle selon la revendication 1, dans laquelle R₁ à R₃ représentent chacun indépendamment un butyle ou un octyle.

7. Composition de résine de chlorure de vinyle selon la revendication 1, dans laquelle le composé représenté par la Formule Chimique 1 est le citrate de tributyle, le citrate de butyldioctyle, le citrate de dibutyloctyle, le citrate de trioctyle, ou un mélange de ceux-ci.
